(19) Europäisches Patentamt
European Patent Office
Office européen des brevets

(11) Veröffentlichungsnummer: **0 309 775 B1**

(12) **EUROPÄISCHE PATENTSCHRIFT**

(45) Veröffentlichungstag der Patentschrift: **13.05.92**

(51) Int. Cl.[5]: **B60J 7/047**

(21) Anmeldenummer: **88114500.7**

(22) Anmeldetag: **06.09.88**

(54) **Ausstell-Schiebedach für Kraftfahrzeuge.**

(30) Priorität: **26.09.87 DE 3732548**

(43) Veröffentlichungstag der Anmeldung:
**05.04.89 Patentblatt 89/14**

(45) Bekanntmachung des Hinweises auf die Patenterteilung:
**13.05.92 Patentblatt 92/20**

(84) Benannte Vertragsstaaten:
**DE FR GB**

(56) Entgegenhaltungen:
**DE-A- 3 316 739**
**GB-A- 2 113 623**
**US-A- 2 593 360**
**US-A- 2 861 836**

(73) Patentinhaber: **FORD-WERKE AKTIENGESELL-SCHAFT**
**Werk Köln-Niehl Henry-Ford-Strasse Postfach 60 40 02**
**W-5000 Köln 60(DE)**

(84) Benannte Vertragsstaaten:
**DE**

(73) Patentinhaber: **FORD FRANCE SOCIETE ANONYME**
**344 Avenue Napoléon Bonaparte B.P. 307**
**F-92506 Rueil Malmaison Cedex(FR)**

(84) Benannte Vertragsstaaten:
**FR**

(73) Patentinhaber: **FORD MOTOR COMPANY LIMITED**
**Eagle Way**
**Brentwood Essex CM13 3BW(GB)**

(84) Benannte Vertragsstaaten:
**GB**

(72) Erfinder: **Vogt, Hans**
**Kielsberg 36**
**W-5063 Overath(DE)**
Erfinder: **Kloppe, Herbert**
**Kornblumenweg 3**
**W-5024 Pulheim(DE)**

(74) Vertreter: **Messulam, Alec Moses et al**
**A. Messulam & Co. 24 Broadway**
**Leigh on Sea Essex SS9 1BN(GB)**

**Beschreibung**

Die Erfindung bezieht sich auf ein Ausstell-Schiebedach für Kraftfahrzeuge der im Oberbegriff des Patentanspruches 1 aufgezeigten Art.

Aus der DE-C-35 32 15O ist ein Ausstell-Schiebedach für Kraftfahrzeuge mit seitlich geführten und in der Fahrzeuglängsachse verschiebbaren Deckelteilen bekannt, die über Gleit- und Führungsteile entlang einer Gleitschiene bewegbar sind, wobei der erste Deckelteil zunächst in eine Ausstellage und nachfolgend die übrigen Deckelteile über Führungsteile an ihren Gleitteilen nach oben ausstellbar und darauf folgend über ihre Gleitteile mit ihren hinteren Kanten jalousieartig übereinanderliegend zum Freigeben der Dachöffnung in Fahrzeuglängsrichtung nach hinten einen Stapel bildend zusammenschiebbar sind und wobei ferner die Betätigungseinrichtung in Form einer in die Gleitschiene eingebetteten Gewindespindel ausgebildet ist, die über vertikale Mitnehmerstifte auf Gleitteile verschiebend einwirkt und wobei eine die Gleit- und Führungsteile gegeneinander sowie gegenüber der Gleitschiene verriegelnde bzw. freigebende Sperreinrichtung vorgesehen ist, wobei die Gleitteile der übrigen Deckteile aus unteren Gleitstücken und oberen Mitnehmerteilen bestehen.

Bei dem bekannten Ausstell-Schiebedach für Kraftfahrzeuge sind die mit den Gleitteilen zusammenwirkenden Führungsteile als Schiebekulissen ausgebildet, an denen durch Tolleranzsummierungen Beeinträchtigungen der Ausstellfunktion auftreten. Die die Gleit- und Führungsteile gegeneinander verriegelnden Sperrteile und die die Gleitteile gegenüber der Gleitschiene verriegelnden Sperrteile sind voneinander getrennt und bedingen dadurch einen erheblichen Bauaufwand.

Die Aufgabe der Erfindung ist es, ein Ausstell-Schiebedach für Kraftfahrzeuge der im Oberbegriff des Patentanspruches 1 erläuterten Art derart zu verändern, daß einerseits die Ausstell- und Verriegelungsfunktion verbessert und andererseits der Bauaufwand, der Platzbedarf und das Gewicht der Gesamtanordnung verringert wird.

Gemäß der Erfindung wird diese Aufgabe gelöst, indem ein Ausstell-Schiebedach für Kraftfahrzeuge nach dem Oberbegriff des Patentanspruches 1 die im Kennzeichenteil des Patentanspruches 1 aufgezeigten Merkmale aufweist.

In den weiteren Ansprüchen sind zweckmäßige Ausgestaltungen der Erfindung erläutert.

Dadurch, daß die Gleitteile aus unteren und oberen Gleitstücken bestehen, von denen das obere Gleitstück den vertikalen Mitnehmerstift trägt und das untere Gleitstück über einen Raststein mit der Gleitschiene verriegelt ist und seitlich ein Zahnrad drehbar gelagert trägt und wobei das obere Gleitstück seitlich oben eine Zahnstange aufweist, die in das Zahnrad eingreift und dieses während einer anfänglichen Relativbewegung des oberen Gleitstükkes zum unteren Gleitstück antreibt, wodurch dieses über einen Bolzen, der in einen Schlitz der Ausstellkulisse eingreift, diese und damit die übrigen Deckelteile ausstellt, wobei die Schlitze der weiteren Ausstellkulissen gegenüber dem Schlitz in der ersten Aufstellkulisse einen Leergangbereich aufweisen und wobei am Ende der Relativbewegung der Raststein in eine Ausnehmung im oberen Gleitstück einfällt und dadurch die Verriegelung zur Gleitschiene löst und die beiden Gleitstücke miteinander koppelt wodurch diese die übrigen ausgestellten Deckelteile nach hinten mitnehmen, wird mit einer vereinfachten Ausstellmechanik und die in die Gleit- und Führungsteile integrierte Sperreinrichtung eine sichere Verriegelung des Ausstell-Schiebedaches in seiner geschlossenen Lage erreicht und eine zuverlässige Ausstellbewegung während eines anfänglichen Bewegungsablaufes und eine sichere Verriegelung der Deckelteile in der ausgestellten Lage während des weiteren Bewegungsablaufes nach hinten erzielt

Dadurch, daß das vordere Gleitteil für den ersten Deckelteil ein Mitnehmerteil aufweist, das den vertikalen Mitnehmerstift trägt und das Gleitteil mit dem Mitnehmerteil über einen Raststein koppelbar bzw. mit der Gleitschiene verriegelbar ist und das Gleitteil während einer anfänglichen Relativbewegung über eine seitlich oben angeordnete Zahnstange ein in einem ortsfesten Lagerbock drehbar gelagertes Zahnrad treibt, das über einen Bolzen der in einen Schlitz der Ausstellkulisse vorne eingreift oder über eine angelenkte Stange mit dem Deckel verbunden ist, diese und damit den ersten Deckelteil ausstellt und im weiteren Bewegungsablauf das Mitnehmerteil über den Raststein vom vorderen Gleittteil abkoppelt und das vordere Gleitteil über einen federbelasteten Riegel, der auf den Raststein einwirkt, mit der Gleitschiene verriegelt wird und den Deckelteil in seiner Ausstellage festhält, wird eine erwünschte Spoilerfunktion des ersten Deckelteiles sowohl zu Beginn der Öffnungsbewegung als auch während dem nachfolgenden Freigeben der gesamten Dachöffnung bereitgestellt.

Dadurch, daß die Rasteine zwischen dem unteren und oberen Gleitstück von aufeinanderfolgenden Gleitteilen sowie die entsprechenden Rastausnehmungen in der Gleitschiene unterschiedliche Schrägungswinkel aufweisen, wird sichergestellt, daß die einzelnen Rasteine nur in die ihnen zugeordneten Rastausnehmungen der Gleitschiene einrasten können wohingegen die übrigen über die nicht für sie vorgesehenen Ausnehmungen darüberlaufen.

Die Erfindung wird anhand eines in der Zeichnung gezeigten Ausführungsbeispieles erläutert. Es zeigt:

Fig. 1 Einen schematischen, vertikalen Längsschnitt durch ein Ausstell-Schiebedach gemäß der Erfindung in geschlossener Stellung mit zum Teil dargestellter Ausstellmechanik;

Fig. 2 Einen schematischen, vertikalen Längsschnitt durch das Ausstell-Schiebedach gemäß der Erfindung in geöffneter Stellung;

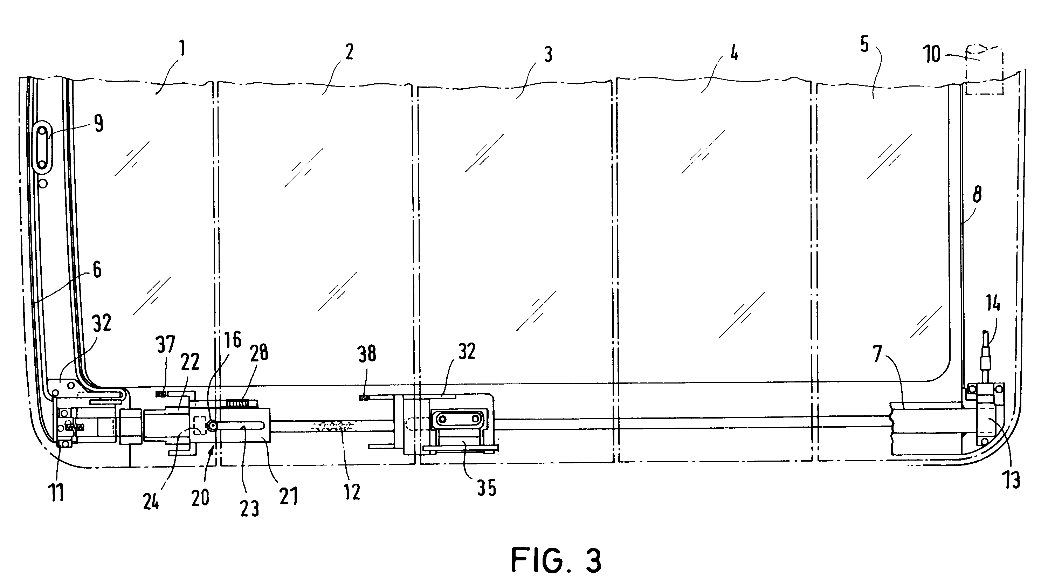

Fig. 3 Eine schematische, halbseitige Draufsicht auf ein Ausstell-Schiebedach gemäß Fig. 1;

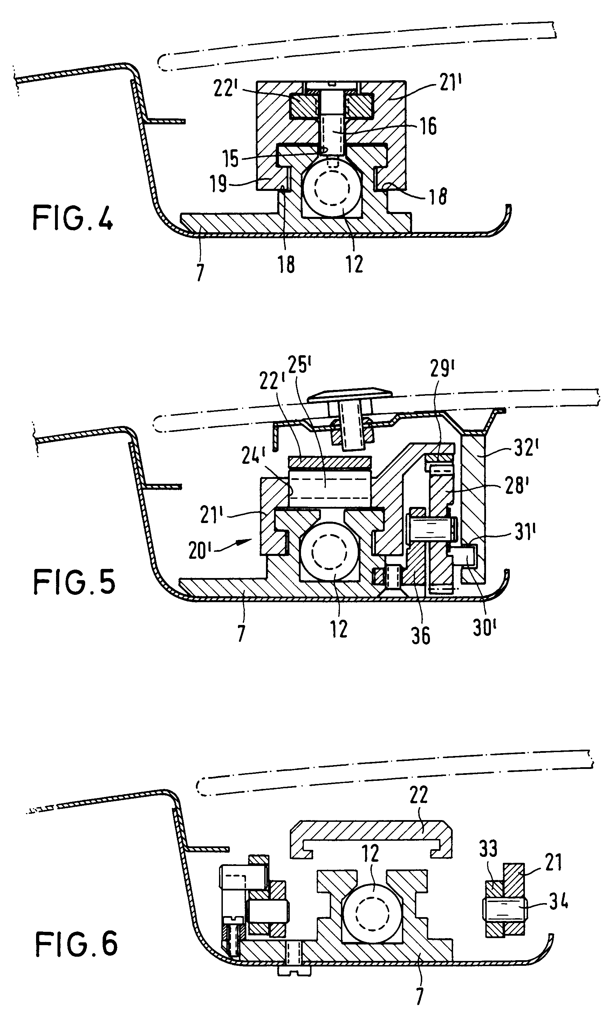

Fig. 4 Einen Schnitt entlang der Linie IV-IV in Fig. 1;

Fig. 5 Einen Schnitt entlang der Linie V-V in Fig. 1;

Fig. 6 Einen Schnitt entlang der Linie VI-VI in Fig. 1;

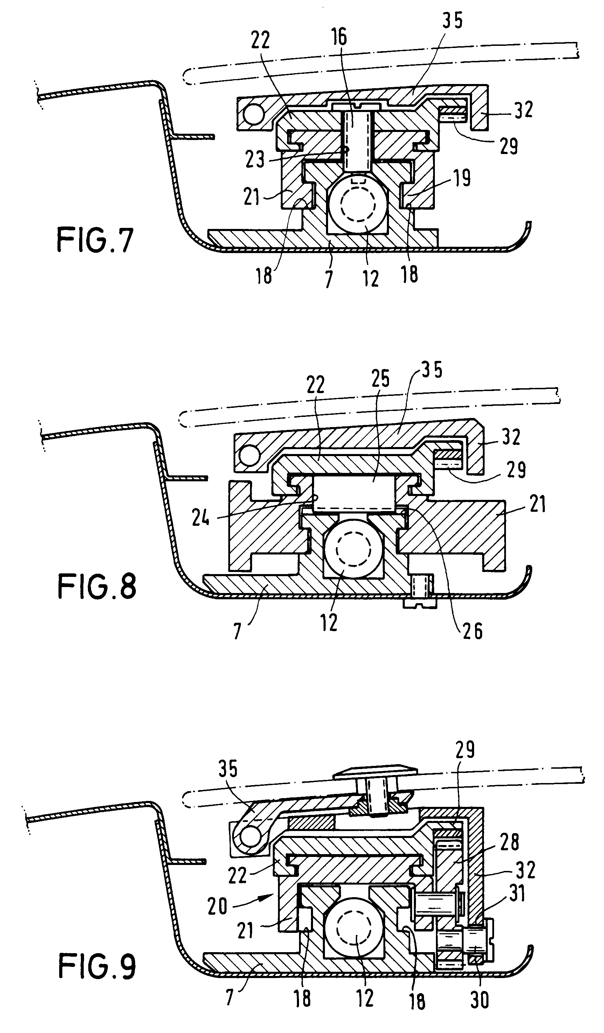

Fig. 7 Einen Schnitt entlang der Linie VII-VII in Fig. 1;

Fig. 8 Einen Schnitt entlang der Linie VIII-VIII in Fig. 1.

Fig. 9 Einen Schnitt entlang der Linie IX-IX in Fig. 1;

Fig. 10 a,b,c Eine schematische Funktionserläuterung der Zahnstange/Zahnrad-Betätigung.

Die Ausführungsform eines Ausstell-Schiebedaches für Kraftfahrzeuge gemäß der Erfindung weist fünf Deckelteile 1, 2, 3, 4 und 5 auf, die vorzugsweise aus getönten Glasscheiben bestehen können.

Das Deckelteil 1 soll hierbei während eines anfänglichen Bewegungsablaufes der Betätigungsmechanik des AusstellScheibedaches in eine anfängliche Ausstellage bewegt werden, in der es eine Lüftungsfunktion bereitstellt. Im weiteren Bewegungsablauf können die Deckelteile 2, 3, 4 und 5 gleichfalls nach oben ausgestellt werden und darauffolgend können sämtliche Deckelteile mit ihren hinteren Kanten jalousieartig übereinanderliegend zum Freigeben einer maximalen Dachöffnung in Fahrzeuglängsrichtung nach hinten einen Stapel bildend zusammengeschoben werden.

Das Ausstell-Schiebedach bildet eine komplett vormontierte Einheit, die aus einer vorderen Querstrebe 6, zwei seitlichen Gleitschienen 7 und einer hinteren Querstrebe 8 besteht. Die vordere Querstrebe 6 weist zwei Scharniere 9 für das erste Deckelteil 1 auf, nachdem dieses in der vorliegenden Ausführungsform als in seiner Lüftungs-Ausstell- oder Spoilerlage verbleibend vorgesehen ist. Die hintere Querstrebe 8 nimmt einen elektrischen Antriebsmotor 10 auf.

In den seitlichen Gleitschienen 7 erstreckt sich zwischen einem vorderen Lagerblock 11 eine in die Gleitschiene 7 eingebettete Gewindespindel 12 deren hinteres Ende in einem Schneckengetriebe 13 gelagert und angetrieben ist.

Die Kraftübertragung vom elektrischen Antriebsmotor 10 auf die Gewindespindel 12 erfolgt über biegsame Wellen 14 zu den jeweiligen Schneckengetrieben 13.

Durch die unterschiedlichen Wege, welche die Deckelteile 2, 3, 4 und 5 zurückzulegen haben, weist die Gewindespindel 12 drei verschiedene Steigungsabschnitte auf.

Dadurch, daß die Gleitschiene 7 so ausgebildet ist, daß die Gewindespindel 12 in ihr eingebettet aufgenommen wird, wird die Gewindespindel 12 über ihre gesamte Länge einwandfrei abgestützt. Die Gleitschiene 7 weist oben einen Spalt 15 auf, durch den ein vertikaler Mitnehmerstift 16 einragen und in Eingriff mit dem Gewindegang an der Gewindespindel 12 gelangen kann.

Auf beiden Seiten der Gleitschiene 7 sind Gleitnuten 18 vorgesehen, in die Gleitstifte 19 von Gleitteilen 20 eingreifen.

Die Gleitteile 20 bestehen aus jeweils einem unteren Gleitstück 21 und einem oberen Mitnehmerteil 22, die relativ zueinander verschiebbar miteinander verbunden sind. Das obere Mitnehmerteil 22 trägt hierbei den vertikalen Mitnehmerstift 16 und dieser kann in einem Langloch 23 im unteren Gleitstück 21 eine Relativbewegung ausführen.

In einer Durchbrechung 24 im unteren Gleitstück 21 ist ein Raststein 25 vertikal verlagerbar angeordnet, der sowohl mit entsprechenden Ausnehmungen 26 an der Gleitschiene 7 als auch mit Ausnehmungen 27 im oberen Mitnehmerteil 22 verriegelnd bzw. koppelnd zusammenwirken kann.

Das untere Gleitstück 21 trägt seitlich ein Zahnrad 28 drehbar gelagert und das obere Mitnehmerteil 22 ist seitlich oben mit einer Zahnstange 29 versehen, die in das Zahnrad 28 eingreift. Das Zahnrad 28 weist einen seitlichen Bolzen 30 auf, mit dem es in einen Schlitz 31 an einer Ausstellkulisse 32 angreift, die mit ihren vorderen Enden 33 an Bolzen 34 am unteren Gleitstück 21 schwenkbar gelagert ist und an ihrer Oberseite eine scharnierartig angelenkte Befestigungsplatte 35 für die Deckelteile trägt.

Durch eine anfängliche Relativbewegung des oberen Mitnehmerteiles 22 gegenüber dem unteren Gleitstück 21 treibt die Zahnstange 29 das Zahnrad 28 und dieses treibt über den Bolzen 30 und den Schlitz 31 die Ausstellkulisse 32 an und diese stellt damit die Deckelteile 1 bis 5 aus. Am Ende der Relativbewegung zwischen dem unteren Gleitstück 21 und dem oberen Mitnehmerteil 22 kann der Raststein 25 in die Ausnehmung 27 im oberen Mitnehmerteil 22 einfallen und löst dadurch die Verriegelung zur Gleitschiene 7 und koppelt jedoch hierdurch das untere Gleitstücke 21 mit dem oberen Mitnehmerteil 22.

Während eines weiteren Bewegungsablaufes werden nunmehr sämtliche Deckelteile 2 bis 5 zunächst gleichförmig und danach entsprechend den unterschiedlichen Steigungsverläufen an der Gewindespindel 12 in Fahrzeuglängsrichtung nach hinten bewegt und bilden schließlich einen jalousieartigen Stapel.

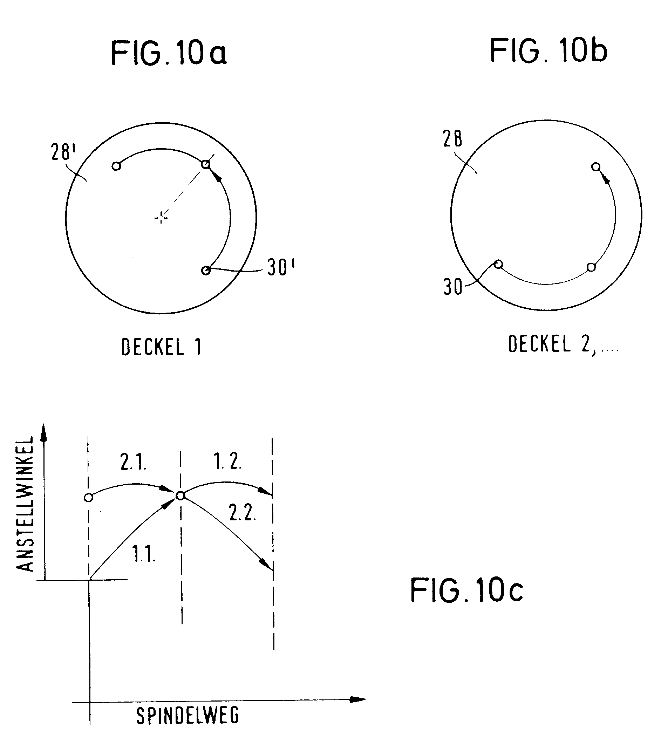

Die Auslegung der Schlitze 31 in den Ausstellkulissen 32 kann hierbei derart erfolgen, daß bei einer Drehbewegung des Zahnrades 28 durch unterschiedliche Anlenkungspunkte der Bolzen 30' bzw. 30 das erste Deckelteil 1 unmittelbar eine erhebliche Ausstellbewegung ausführt, wohingegen die weiteren Deckelteile 2, 3, 4 und 5 nur eine geringe Ausstellbewegung ausführen, die sich aus der in den Fig. 10 a - 10 c erläuterten Funktionsweise ergibt. Die Schlitze 31 in den weiteren Ausstellkulissen 32 können jedoch auch so geformt sein, daß sie einen Leergangbereich aufweisen, so daß die Deckelteile 2, 3,4 und 5 zunächst noch geschlossen bleiben.

Das Gleitteil 20' für den ersten Deckelteil 1 besteht aus einem unteren Gleitstück 21' und einem oberen Mitnehmerteil 22', das den vertikalen Mitnehmerstift 16 trägt.

Das untere Gleitstück 21' ist mit dem Mitnehmerteil 22' über einen in einer Durchbrechung 24' im Gleitstück 21' vertikal verlagerbaren Raststein 25 koppelbar bzw. mit der Gleitschiene 7 verriegelbar.

Hier ist das untere Gleitstück 21' seitlich oben mit einem Zahnstangenteil 29' versehen, das in ein Zahnrad 28' eingreift, das jedoch über einen Lagerbock 36 ortsfest an der Gleitschiene 7 befestigt ist. Ein seitlicher Bolzen 30' am Zahnrad 28' steht in Eingriff mit einem Schlitz 31' in der vorderen Ausstellkulisse 32'.

Während einer anfänglichen Bewegung des Mitnehmerteiles 22' wird das untere Gleitstück 21' über den Raststein 25 mitgenommen und die Zahnstange 29' betätigt das Zahnrad 28' und dieses treibt über den Bolzen 30' und den Schlitz 31' die Ausstellkulisse 32' an und stellt hierdurch den Deckelteil 1 aus.

Bei der vorliegenden Ausführungsform eines Ausstell-Schiebedaches der Erfindung ist vorgesehen, daß der erste Deckelteil 1 auch dann in seiner Ausstell-Lüftungs- oder Spoilerlage verbleibt, wenn die übrigen Deckelteile 2, 3, 4 und 5 zum Freigeben der Dachöffnung völlig nach hinten einen Stapel bildend verschoben sind.

Hierfür ist es erforderlich, daß bei einem weiteren Bewegungsablauf das Mitnehmerteil 22' über den Raststein 25' vom Gleitstück 21' abgekoppelt wird und sich mit der fortschreitenden Bewegung der Gewindespindel 12 nach hinten verlagern kann. Das Gleitstück 21' wird hierbei über ein federbelastetes Riegelteil (nicht gezeigt), das auf den Raststein 25' einwirkt, in einer entsprechenden Ausnehmung in der Gleitschiene 7 verriegelt und hält das Deckelteil 1 somit in seiner Ausstellage fest.

Damit die den einzelnen Gleitteilen 20 zugeordneten Rasteine 25 nur in die dafür vorgesehenen Rastausnehmungen 26 in der Gleitschiene 7 einrasten, müssen die Rastausnehmungen und hiermit abgestimmt die Raststeine mit verschiedenen Schrägungswinkeln versehen werden.

So kann für Deckelteil 1 ein Schrägungswinkel von 90° und für Deckelteil 2 ebenfalls ein Schrägungswinkel von 90° vorgesehen werden, da Deckelteil 1 in seiner vorderen Position verbleibt und somit dessen Raststein keine folgende Rastausnehmung überläuft. Die dem Deckelteil 3 zugeordnete Rastausnehmung und der Raststein weisen einen Schrägungswinkel von minus 20° gegenüber der Längsachse der Gleitschiene auf und die dem Deckelteil 4 zugeordneten Rastausnehmungen und der Raststein weisen einen Schrägungswinkel von plus 20° bezogen auf die Längsachse der Gleitschiene 7 auf. Die dem Deckelteil 5 zugeordneten Rastausnehmungen und der Raststein können dann wieder einen Schrägungswinkel von 90° bezogen auf die Längsachse der Gleitschiene aufweisen.

Beim Schließen des Ausstell-Schiebedaches werden die zu Gleitteilen 20 gekoppelten unteren Gleitstücke 21 und oberen Mitnehmerteile 22 in Fahrzeuglängsrichtung nach vorne verlagert bis entsprechende in unterschiedlicher Höhenlage angeordnete Anschläge 37 und 38 an der Gleitschiene 7 mit entsprechenden Anschlagbolzen an den Gleitteilen 20 zusammenwirken, wodurch die Gleitteile 20 in ihrer Ruhelage festgehalten werden und durch eine weitere Bewegung der oberen Mitnehmerteile 22 wieder eine Relativbewegung auftritt, durch die über die Zahnstange 29 das Zahnrad 28 in umgekehrter Richtung betätigt wird, wodurch die Ausstellkulissen 32 und damit die Deckelteile 2, 3, 4 und 5 abgesenkt werden.

In ähnlicher Weise wird zum Ende des Schließvorganges das nach vorne bewegte Mitnehmerteil 22' den Riegelteil ausheben und über den Raststein 25' das vordere Gleitstück 21' ankoppeln. Dadurch wird das vordere Gleitstück 21' nach vorne mitgenommen und betätigt über den Zahnstangenteil 29' das Zahnrad 28' und dieses betätigt über den Bolzen 30' und den Schlitz 31' die vordere Ausstellkulisse 32', wodurch der vordere Deckelteil abgesenkt und schließlich in seine geschlossene Lage gebracht und festgehalten wird.

In den Fig. 10 a - 10 c wird die günstige Funktionsweise der Zahnstange/Zahnrad-Betätigung erläutert.

Der am Zahnrad 28′ für den ersten Deckelteil 1 vorgesehene Bolzen 30′ ist in einer Winkelposition angelenkt, die von den Winkelpositionen der angelenkten Bolzen 30 an den übrigen Zahnrädern 28 der übrigen Deckelteile 2 - 5 derart abweicht, daß bei einem Bewegungsablauf der Zahnräder 28′ bzw. 28, der in der Fig. 10 mit 1,1 bzw. 2,1 bezeichnet ist, das Deckelteil 1 unmittelbar eine erhebliche Ausstellung erfährt, während die übrigen Deckelteile 2 - 5 nur eine geringe Bewegung erfahren.

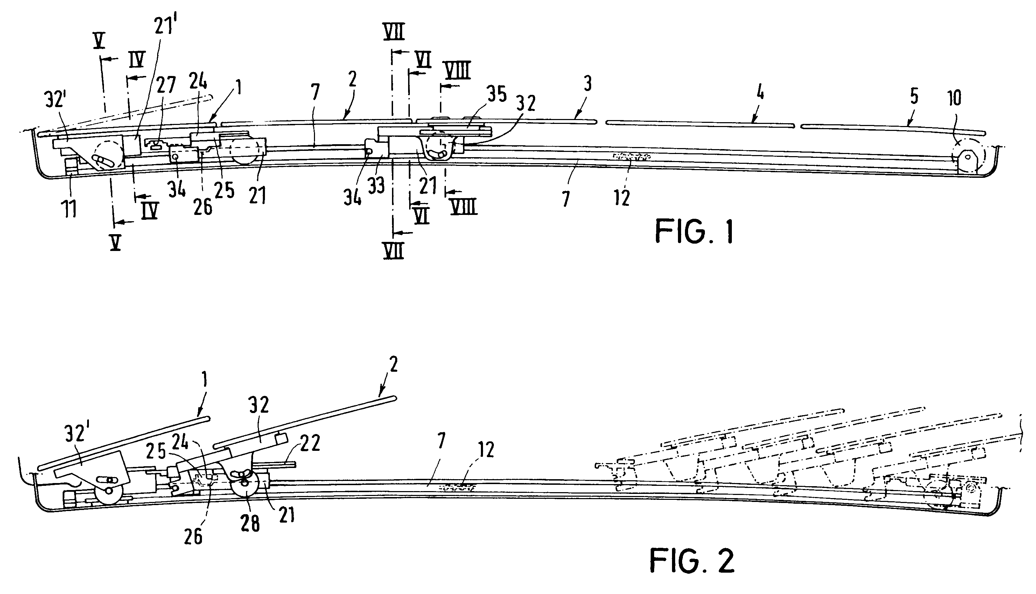

Während des in der Fig. 1O c mit 1,2 bzw. 2,2 bezeichneten Bewegungsablaufes der Zahnräder 28′ bzw. 28 erfährt darauffolgend das Deckelteil 1 nur eine geringe Bewegung wohingegen die übrigen Deckelteile 2 - 5 voll ausgestellt werden.

Diese günstige Funktionsweise ergibt sich durch die Funktion, die ein Bolzen an einem Zahnrad während dessen Drehung durchläuft.

**Patentansprüche**

1.    Ausstell-Schiebedach für Kraftfahrzeuge mit seitlich geführten und in der Fahrzeuglängsachse verschiebbaren Deckelteilen (1,2,3,4,5), die über Gleit- (20,20') und Führungsteile (18,19,18',19') entlang einer Gleitschiene (7) bewegbar sind, wobei der erste Deckelteil (1) zunächst in eine Ausstellage und nachfolgend die übrigen Deckelteile (2,3,4,5) über Führungsteile (18,19,18',19') an Gleitteilen (20,20') nach oben ausstellbar und darauffolgend über die Gleitteile (20) mit ihren hinteren Kanten jalousieartig übereinanderliegend zum Freigeben der Dachöffnung in Fahrzeuglängsrichtung nach hinten einen Stapel bildend zusammenschiebbar sind und wobei ferner die Betätigungseinrichtung in Form einer in die Gleitschiene (7) eingebetteten Gewindespindel (12) ausgebildet ist, die über vertikale Mitnehmerstifte (16) auf die Gleitteile (20,20') verschiebend einwirkt und wobei für die Gleit- (20,20') und Führungsteile (18,19,18',19') sie gegeneinander sowie gegenüber der Gleitschiene verriegelnde bzw. freigebende Sperreinrichtungen (25,26,27) vorgesehen sind, wobei die Gleitteile (20) der übrigen Deckteile (2,3,4,5) aus unteren Gleitstücken (21) und oberen Mitnehmerteilen (22) bestehen **dadurch gekennzeichnet**, daß das obere Mitnehmerteil (22) den vertikalen Mitnehmerstift (16) trägt und das untere Gleitstück (21) über einen Raststein (25) mit der Gleitschiene (7) bzw. mit dem oberen Mitnehmerteil (22) verriegelbar bzw. koppelbar ist und das untere Gleitstück (21) seitlich ein Zahnrad (28) drehbar gelagert trägt und das obere Mitnehmerteil (22) seitlich oben eine Zahnstange (29) aufweist, die in das Zahnrad (28) eingreift und dieses (28) während einer anfänglichen Relativbewegung des oberen Mitnehmerteiles (22) zum unteren Gleitstück (21) antreibt, wodurch dieses (28) über einen Bolzen (30), der in einen Schlitz (31) in einer Ausstellkulisse (32) eingreift, diese und damit die übrigen Deckelteile (2, 3, 4 und 5) ausstellt, wobei am Ende der Relativbewegung der Raststein (25) in eine Ausnehmung (27) im oberen Mitnehmerteil (22) einfallen kann und dadurch die Verriegelung zur Gleitschiene (7/26) gelöst und das untere Gleitstück (21) und der obere Mitnehmer (22) miteinander gekoppelt werden, wodurch diese im weiteren Bewegungsablauf die ausgestellten Deckelteile (1, 2, 3, 4 und 5) nach hinten mitnehmen.

2.    Ausstell-Schiebedach nach Anspruch 1,- **dadurch gekennzeichnet**, daß ein Gleitteil (20′) für den ersten Deckelteil (1) aus einem unteren Gleitstück (21′) und einem oberen Mitnehmerteil (22′) besteht, das den vertikalen Mitnehmerstift (16) trägt und das untere Gleitstück (21′) mit dem Mitnehmerteil (22′) über einen Raststein (25′) koppelbar bzw. mit der Gleitschiene (7/26′) verriegelbar ist und das untere Gleitstück (21′) seitlich oben eine Zahnstange (29′) aufweist, die in ein an einem ortsfesten Lagerbock (36) drehbar gelagertes Zahnrad (28′) eingreift und dieses während einer Relativbewegung antreibt, das über einen Bolzen (30′) in einen Schlitz (31′) einer Ausstellkulisse (32′) eingreift und diese und damit den ersten Deckelteil (1) ausstellt, wobei im weiteren Bewegungsablauf das Mitnehmerteil (22′) über den Raststein (25′) vom unteren Gleitstück (21′) abgekoppelt wird und das untere Gleitstück (21′) über einen federbelasteten Riegelteil, der auf den Raststein (25′) einwirkt, mit der Gleitschiene (7/26′) verriegelt wird und dadurch das erste Deckelteil (1) in seiner Ausstellage festhält.

3.    Ausstell-Schiebedach nach den Ansprüchen 1 und 2, **dadurch gekennzeichnet**, daß die an aufeinanderfolgenden Gleitteilen (20) vorgesehenen Raststeine (25) und die ihnen zugeordneten entsprechenden Rastausnehmungen (26) an der Gleitschiene (7) unterschiedliche Schrägungswinkel aufweisen, derart, daß nicht einer bestimmten Rastausnehmung zugeordnete Raststeine in diese Ausnehmungen einrasten sondern während des Bewegungsablaufes darüber hinweggleiten.

## Claims

1. Raise and slide roof for motor vehicles with laterally guided cover parts (1, 2, 3, 4, 5) which are displaceable in the longitudinal axis of the vehicle and can be moved along a slide rail (7) via sliders (20, 20') and guiding parts (18, 19, 18', 19'), it being possible to raise the first cover part (1) into a raised position first of all and then to raise the remaining cover parts (2, 3, 4, 5) upwards via guiding parts (18, 19, 18',19') on sliders (20, 20') and subsequently, via the sliders (20), to push them together rearwards in the longitudinal direction of the vehicle, forming a stack, with their rear edges overlapping like a louver, in order to expose the roof opening and, furthermore, the actuating device being constructed in the form of a threaded spindle (12) which is bedded into the slide rail (7) and exerts a displacing action on the sliders (20, 20') via vertical driving pins (16), and locking devices (25, 26, 27) which lock or release the sliders (20, 20') and guiding parts (18, 19, 18', 19') relative to one another and relative to the slide rail being provided, the sliders (20) of the remaining cover parts (2, 3, 4, 5) comprising lower sliding pieces (21) and upper driving parts (22), characterised in that the upper driving part (22) carries the vertical driving pin (16) and the lower sliding piece (21) can be locked or coupled respectively, via a catch block (25), to the slide rail (7) or the upper driving part (22) and the lower sliding piece (21) carries a rotably mounted gear (28) at the side and the upper driving part (22) has, laterally at the top, a rack (29) which engages in the gear (28) and drives the latter (28) during an initial relative movement of the upper driving part (22) in relation to the lower sliding piece (21), as a result of which the said gear (28), via a pin (30) which engages in a slot (31) in a slotted raising link (32), raises the said link and hence the remaining cover parts (2, 3, 4 and 5), the catch block (25) being able, at the end of the relative movement, to fall into a recess (27) in the upper driving part (22) and the locking relative to the slide rail (7/26) thereby being released and the lower sliding piece (21) and the upper driver (22) being coupled to one another, the latter thereby taking the raised cover parts (1, 2, 3, 4 and 5) along rearwards in the further sequence of motions.

2. Raise and slide roof according to Claim 1, characterised in that a slider (20') for the first cover part (1) comprises a lower sliding piece (21') and an upper driving part (22') which carries the vertical driving pin (16), and, via a catch block (25'), the lower sliding piece (21') can be coupled to the driving part (22') or locked to the slide rail (7/26') and the lower sliding piece (21') has, laterally at the top, a rack (29') which engages in a gear (28') rotatably mounted on a fixed bearing bracket (36) and drives the said gear during a relative movement, which gear engages via a pin (30') in a slot (31') of a slotted raising link (32') and raises the latter and hence the first cover part (1), in the further sequence of motions the driving part (22') being decoupled from the lower sliding piece (21') via the catch block (25') and the lower sliding piece (21') being locked to the slide rail (7/26') via a spring-loaded locking part, which acts on the catch block (25'), and thereby holds the first cover part (1) fast in its raised position.

3. Raise and slide roof according to Claims 1 and 2, characterised in that the catch blocks (25) provided on successive sliders (20) and the corresponding catch recesses (26), assigned to the said catch blocks, on the slide rail (7) have different bevel angles such that catch blocks assigned to a particular catch recess do not engage in these recesses but slide over the latter during the sequence of motions.

## Revendications

1. Toit ouvrant à panneaux articulés coulissants pour automobiles, ayant des panneaux (1, 2, 3, 4, 5) de couverture guidés latéralement, coulissant dans le sens longitudinal du véhicule, qui peuvent être déplacés le long d'une glissière (7) par l'intermédiaire d'éléments (20, 20') de glissement et d'éléments (18, 19; 18', 19') de guidage, le premier des panneaux (1) de couverture étant d'abord amené dans une position projetée, et les autres panneaux (2, 3, 4, 5) de couverture étant ensuite basculés vers le haut au moyen d'éléments (18, 19; 18', 19') de guidage disposés sur leurs éléments (20, 20') de glissement, pour être rassemblés ensuite, afin de dégager la baie du toit, en glissant sur leurs éléments (20) de glissement dans le sens longitudinal du véhicule vers l'arrière de celui-ci, formant ici un empilage, leurs bords arrière étant superposés les uns sur les autres de façon similaire à un store à lamelles, et le dispositif de commande étant réalisé sous forme d'une broche filetée (12) intégrée dans la glissière (7), qui agit sur les éléments (20, 20') de glissement, de manière à les déplacer, par l'intermédiaire de doigts verticaux (16) d'entraînement, et des dispositifs (25, 26, 27) de verrouillage étant prévus, qui permettent de verrouiller et de libérer alternativement les éléments (20, 20') de glissement par rapport aux éléments (18, 19; 18', 19') de guidage, et de verrouiller et de libérer ces éléments par rapport à la glissière (7), et les éléments (20) de glissement des autres panneaux (2, 3, 4, 5) de couverture étant constitués de patins inférieurs (21) de glissement et de pièces supérieures (22) d'entraînement, caractérisé en ce que la pièce supérieure (22) d'entraînement porte le doigt vertical (16) d'entraînement et que le patin inférieur (21) peut être verrouillé, voire accouplé, par l'intermédiaire d'un coulisseau (25) d'arrêt, à la glissière (7), voire à la pièce supérieure (22) d'entraînement, et en ce que le patin inférieur (21) porte une roue dentée latérale (28) libre en rotation, et que la pièce supérieure (22) d'entraînement porte, dans sa partie latérale supérieure, une crémaillère (29) qui s'engrène dans la roue dentée (28) et l'entraîne, lors d'un mouvement relatif initial entre la pièce supérieure (22) d'entraînement et le patin inférieur (21), ce qui fait que la roue dentée (28) amène, par l'intermédiaire d'un axe (30) engagé dans une fente (31) réalisée dans une coulisse (32) de commande de projection, ladite coulisse de commande de projection et, de ce fait, les autres panneaux (2, 3, 4 et 5) de couverture en position projetée, le coulisseau (25) d'arrêt pouvant s'enclencher, à la fin du dit mouvement relatif, dans une encoche (27) pratiquée dans la pièce supérieure (22) d'entraînement, provoquant alors le déverrouillage par rapport à la glissière (7/26) et l'accouplement entre le patin inférieur (21) et la pièce supérieure (22) d'entraînement, ce qui a pour conséquence qu'au cours de la suite du déroulement des mouvements, ces derniers entraînent les panneaux basculés (1, 2, 3, 4 et 5) de couverture vers l'arrière.

2. Toit ouvrant à panneaux articulés coulissants selon la revendication 1, caractérisé en ce qu'une pièce (20') de glissement du premier panneau (1) de couverture est composée par un patin inférieur (21') et une pièce supérieure (22') d'entraînement, qui porte le doigt vertical (16) d'entraînement, et en ce que le patin inférieur (21') peut être accouplé à la pièce supérieure (22') d'entraînement par l'intermédiaire d'un coulisseau (25) d'arrêt et peut être verrouillé de la même façon par rapport à la glissière (7/26'), et en ce que le patin inférieur (21') comporte, dans sa partie latérale supérieure, une crémaillère (29') qui s'engrène dans une roue dentée (28') maintenue, de façon libre en rotation, dans un palier stationnaire (36) et entraîne cette roue dentée lors d'un mouvement relatif, la roue dentée s'engageant, par l'intermédiaire d'un axe (30'), dans une fente (31') d'une coulisse (32') de commande de projection et amenant ainsi la coulisse de commande de projection et, de ce fait, le premier panneau (1) de couverture, en position projetée, et en ce que, pendant la suite du déroulement des mouvements, la pièce (22') d'entraînement est désaccouplée du patin inférieur (21'), par l'intermédiaire du coulisseau (25') d'arrêt, et que le patin inférieur (21') est verrouillé par rapport à la glissière (7/26'), par l'intermédiaire d'un verrou fonctionnant sous l'action d'un ressort et agissant sur le coulisseau (25'), maintenant de ce fait le premier panneau (1) de couverture dans la position projetée.

3. Toit ouvrant à panneaux articulés coulissants selon les revendications 1 et 2, caractérisé en ce es coulisseaux (25) d'arrêt disposés sur des éléments (20) de glissement successifs ainsi que les encoches (26) d'arrêt correspondantes réalisées dans la glissière (7) sont dotés d'angles de chanfrein différents, de telle sorte que des coulisseaux d'arrêt, qui ne sont pas attribués à une encoche d'arrêt donnée, ne s'enclenchent pas dans cette encoche, mais glissent par-dessus celle-ci au fur et à mesure du déroulement du mouvement.

FIG. 1

FIG. 2

EP 0 309 775 B1

FIG. 3

EP 0 309 775 B1

EP 0 309 775 B1

FIG.4

FIG.5

FIG.6

FIG.7

FIG.8

FIG.9

# FIG.10a

28'

30'

DECKEL 1

# FIG.10b

28

30

DECKEL 2,....

ANSTELLWINKEL

2.1.   1.2.

2.2.

1.1.

SPINDELWEG

# FIG.10c